# EUROPÄISCHE PATENTANMELDUNG

(11) **EP 3 076 031 A1**
(43) Veröffentlichungstag der Anmeldung: **05.10.2016**
(21) Anmeldenummer: 16156882.9
(22) Anmeldetag: 23.02.2016
(51) Int. Cl.: F16C 1/12, B60B 33/02, A61G 7/05, F16C 1/10, B60B 33/00

(54) **FERNBETÄTIGTE ARRETIERUNGSEINRICHTUNG FÜR DIE FESTSTELLEINRICHTUNG MINDESTENS EINER DREH- ODER SCHWENKBAR GELAGERTEN ROLLE**

(30) Priorität: 27.03.2015 DE 202015002346 U
(71) Anmelder: AS Rollen GmbH, 42499 Hückeswagen (DE)
(72) Erfinder:
(74) Vertreter: Döpp, Ludger

(57) **Zusammenfassung**

Fernbetätigte Arretierungseinrichtung (5) für an bewegbaren Einrichtungen, insbesondere Krankenbetten, angebrachten dreh- und/oder schwenkbar ausgebildeten Laufrollen (4) mit einrichtungsseitig vorgesehenen, etwa stangenartig ausgebildeten Schaltelemente (11), die mittel- oder unmittelbar auf Feststellmittel (12) einzelner oder mehrerer Laufrollen (4) einwirken, wobei die Schaltelemente (11) zumindest teilweise miteinander verbunden sind, wobei außerhalb der Schaltelemente (11) einrichtungsseitig ein Schaltkasten (6) vorgesehen ist, sich zwischen Bauteilen des Schaltkastens und Bauelementen einzelner Schaltelemente (11) Bowdenzüge erstrecken und die Bowdenzüge über ein schaltkastenseitig vorgesehenes Betätigungselement über das jeweilige Schaltelement (10) dergestalt auf die Feststellmittel (12) der jeweiligen Laufrollen (4) einwirken, dass selbige ver- oder entriegelbar sind.

## Beschreibung

Die Erfindung betrifft eine fernbetätigte Arretierungseinrichtung für an bewegbaren Einrichtungen, insbesondere Krankenbetten, angebrachten dreh- und/oder schwenkbar ausgebildeten Laufrollen.

Die DE 20 2011 005 162 U1 offenbart eine Betätigungseinrichtung für eine Feststellvorrichtung mindestens einer im Bereich eines zugehörigen Bauteils dreh- und/oder schwenkbar gelagerten Rolle einer bewegbaren Einrichtung, beinhaltend mindestens ein Bedienelement, das über mindestens einen Bowdenzug mit der Feststellvorrichtung der Rolle in Wirkverbindung steht, wobei das Bedienelement einen, innerhalb eines Gehäuses vorgesehenen Zugrahmen beinhaltet, der ein Ende des mindestens einen Bowdenzugs aufnimmt, wobei im Bereich des Zugrahmens eine Führungsverlagerung und Bewegung einer mit einem Exzenter in Wirkverbindung stehenden Schaltwelle vorgesehen ist.

Durch die DE 296 05 267 U1 ist ein Betätigungssystem für die Feststelleinrichtung mindestens einer im Bereich von Bauteilen dreh- und/oder schwenkbar gelagerten Rolle an verfahrbaren Einrichtungen bekannt geworden, mit mindestens einem eine Bremskraft erzeugenden Betätigungselement, mindestens einem der Rolle zugeordneten, im Bereich der Bauteile vorgesehenen Bremselement sowie mindestens einem, sich zwischen den das Rollenrad aufnehmenden Bauteilen und dem Betätigungselement erstreckenden Bowdenzug, wobei sich der Zugdraht des Bowdenzugs mittel oder unmittelbar zwischen dem Bremselement und dem Betätigungselement bzw. mit diesem zusammenwirkenden Bauelementen erstreckt.

Der Erfindung liegt die Aufgabe zugrunde, eine Arretierungseinrichtung für eine Feststellvorrichtung einer im Bereich mindestens eines zugehörigen Bauteils dreh- und/oder schwenkbar gelagerten Rolle einer bewegbaren Einrichtung vorzuschlagen, so dass ein gegenüber dem Stand der Technik vereinfachter Aufbau gegeben ist. Durch diesen vereinfachten Aufbau soll neben einer einfacheren Handhabung auch eine preisgünstige Konstruktion vorgesehen werden, die darüber hinaus auch bei bestehenden bewegbaren Einrichtungen zum Einsatz gelangen kann.

Die Aufgabe wird gelöst durch eine fernbetätigte Arretierungseinrichtung für an bewegbaren Einrichtungen, insbesondere Krankenbetten, angebrachten dreh- und/oder schwenkbar ausgebildeten Laufrollen, mit einrichtungsseitig vorgesehenen, etwa stangenartig ausgebildeten Schaltelemente, die mittel- oder unmittelbar auf Feststellmittel einzelner oder mehrerer Laufrollen einwirken, wobei die Schaltelemente zumindest teilweise miteinander verbunden sind, wobei außerhalb der Schaltelemente einrichtungsseitig ein Schaltkasten vorgesehen ist, sich zwischen Bauteilen des Schaltkastens und Bauelementen einzelner Schaltelemente Bowdenzüge erstrecken und die Bowdenzüge über ein schaltkastenseitig vorgesehenes Betätigungselement über das jeweilige Schaltelement dergestalt auf die Feststellmittel der jeweiligen Laufrollen einwirken, dass selbige ver- oder entriegelbar sind.

Vorteilhafte Weiterbildungen des Erfindungsgegenstandes sind den zugehörigen Unteransprüchen zu entnehmen.

Gegenüber dem aufgezeigten Stand der Technik wird durch die erfindungsgemäße fernbetätigte Arretierungseinrichtung ein vereinfachter konstruktiver Aufbau der zentralen Feststellung der Laufrollen herbeigeführt. Es sind lediglich einzelne Bowdenzüge von Nöten, die auf ein primäres Schaltelement einwirken, das wiederum über eine Schwenkbewegung auf sekundäre, in Längsrichtung der Einrichtung verlaufende und bewegbare Schaltelemente dergestalt einwirkt, dass die translatorische Bewegung der sekundären Schaltelemente laufrollenseitig dergestalt umgelenkt werden kann, dass die im Bereich der jeweiligen Laufrolle vorgesehenen Feststellmittel ver- oder entriegelbar sind.

Einem weiteren Gedanken der Erfindung gemäß weist die Einrichtung, insbesondere das Krankenbett, laufrollenseitig einen umlaufenden Rahmen auf, der zumindest die sekundären Schaltelemente aufnimmt, wobei nur zwei Bowdenzüge vorgesehen sind, die sich zwischen Bauteilen des Schaltkastens und Bauteilen einzelner Schaltelemente erstrecken, dergestalt, dass entweder zwei oder sämtliche der einrichtungsseitig vorgesehenen Feststellmittel zugehöriger Laufrollen ver- oder entriegelbar sind. Zur Vereinfachung der Betätigung sind die freien Enden der Bowdenzüge, sowohl schaltkastenseitig als auch schaltelementseitig, jeweils mit einer Schaltwippe verbunden, wobei durch Betätigung des Betätigungselements eine Ver- oder Entriegelung einzelner oder mehrerer Feststellmittel zugehöriger Laufrollen herbeigeführt werden kann.

Das Betätigungselement kann bedarfsweise manuell oder elektrisch betätigt werden.

Für die manuelle Betätigung kann ein hebelartig ausgebildetes Betätigungselement vorgesehen werden, das lediglich einen geringen Schwenkwinkel überwinden muss, um die Kraft über die Bowdenzüge auf die primären und sekundären Schaltelemente, respektive die Feststellmittel der Laufrollen zu übertragen.

Sofern die Betätigung der Schaltelemente nicht manuell sondern elektrisch durchgeführt werden soll, kann im Bereich des Schaltkastens ein Elektromotor, vorteilhafterweise ein Getriebemotor, vorgesehen werden. Auch hier ist lediglich ein geringer Schwenkwinkel von Nöten, um über die Bowdenzüge auf die entsprechenden Schaltelemente einzuwirken.

Die schaltelementseitig vorgesehene, mit den freien Enden der Bowdenzüge verbundene Wippe ist - einem weiteren Gedanken der Erfindung gemäß - mit dem Endbereich eines, das primäre Schaltelement bildende, Schaltelements verbunden. Die Kippbewegung der Wippe bewirkt in analoger Weise eine Kippbewegung des primären Schaltelements. Das primäre Schaltelement ist quer zwischen den längs verlaufenden, im Bereich des Rahmens vorgesehenen, sekundären Schaltelementen angeordnet, wobei die Kippbewegung des primären Schaltelements über Hilfsmittel dergestalt auf die in Längsrichtung verlaufenden Schaltelemente übertragbar ist, dass selbige nun eine translatorische Bewegung durchführen, die im Bereich der zugehörigen Laufrolle über Schwenkmittel wieder dergestalt umgelenkt wird, dass die laufrollenseitig vorgesehenen Feststellmittel ver- oder entriegelbar sind.

Durch die aufgezeigten Maßnahmen kann eine Bedienperson die Einrichtung, insbesondere das Krankenbett, mit den Händen, in einfacher Weise positionieren, ohne beispielsweise andere Hilfsmittel, wie Pedale oder dergleichen, bedienen zu müssen, durch welche die Person aus dem Gleichgewicht kommen könnte.

Sofern aus Sicherheitsgründen notwendig, kann im Bereich der Schaltelemente, insbesondere des primären Schaltelements, ein zusätzlicher, beispielsweise durch einen Fuß betätigbarer, Feststeller vorgesehen werden. Die Betätigung desselben ist jedoch nur nach Ausfall der zentralen Arretierungseinrichtung erforderlich.

Der Erfindungsgegenstand ist anhand eines Ausführungsbeispiels in der Zeichnung dargestellt und wird wie folgt beschrieben. Es zeigen:
- Figur 1: Prinzipskizze einer bewegbaren Einrichtung;
- Figur 2: Teildarstellung der Einrichtung gemäß Figur 1 mit angedeuteter fernbetätigter Arretierungseinrichtung;
- Figur 3: Weitere Teildarstellungen der Einrichtung samt Arretierungseinrichtung;
- Figur 3a: ergänzende Teildarstellung der Einrichtung gemäß Figur 3;
- Figur 4: Detailskizze der Arretierungseinrichtung;
- Figur 5: Teildarstellung einzelner Bauteile einer manuell betätigbaren Arretierungseinrichtung;
- Figur 6: Teildarstellung einzelner Bauteile einer elektrisch betätigbaren Arretierungseinrichtung;
- Figur 7: Alternative Ausgestaltungsform der erfinderischen Einrichtung.

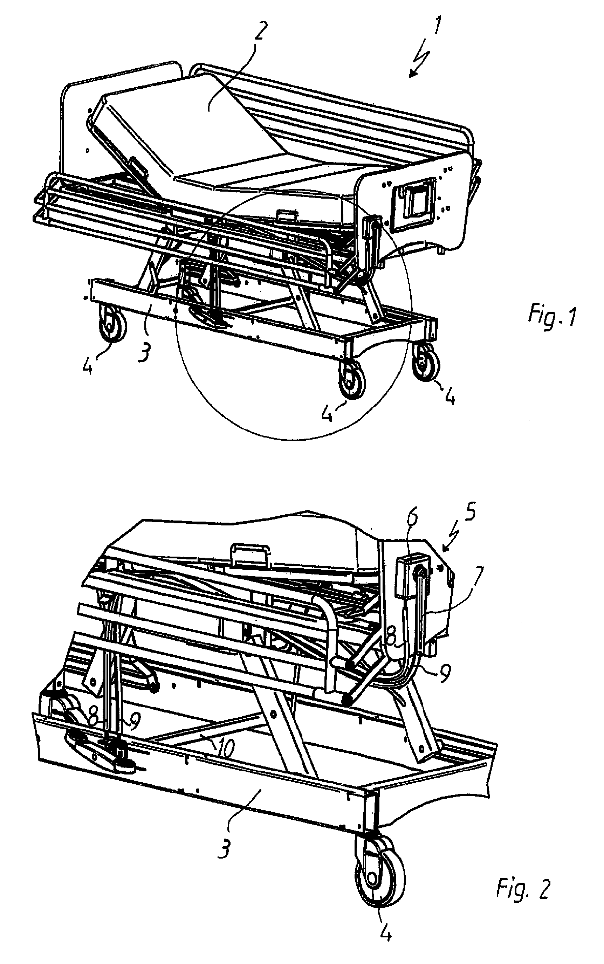

Figur 1 zeigt als Prinzipskizze eine bewegbare Einrichtung 1, hier ausgebildet als Krankenbett. Die Einrichtung 1 verfügt über verstellbare Liegemittel 2, die hier jedoch nicht weiter betrachtet werden. Die Einrichtung 1 verfügt darüber hinaus über einen unteren Rahmen 3, an welchem dreh- und schwenkbar ausgebildete Laufrollen 4 befestigt sind. Eine jede Laufrolle 4 verfügt über hier nicht erkennbare, später dargestellte Feststellmittel, die paarweise oder in ihrer Gesamtheit zentral ver- und entriegelbar sind.

Figur 2 zeigt als Teildarstellung der Figur 1 den Rahmen 3 sowie eine einzelne Laufrolle 4. Ferner erkennbar ist die erfindungsgemäße fernbetätigte Arretierungseinrichtung 5. Hier dargestellt ist ein Schaltkasten 6, ein Handhebel 7 als Betätigungselement, zwei Bowdenzüge 8,9 sowie ein primäres Schaltelement 10.

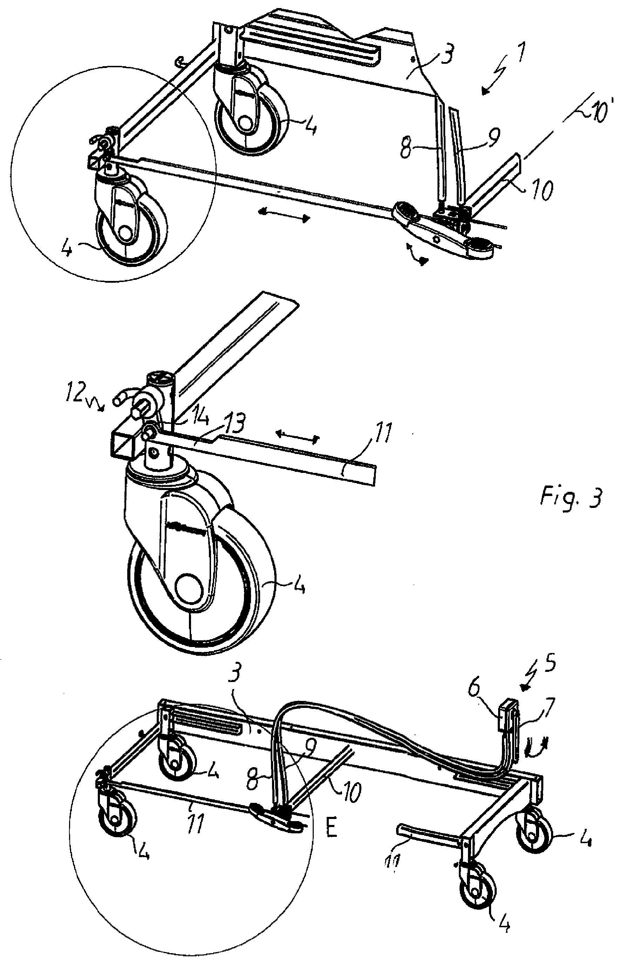

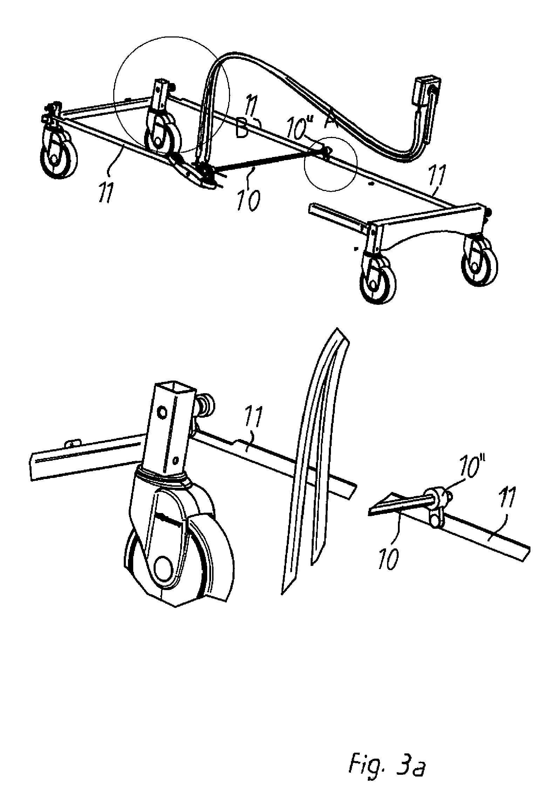

Figur 3 zeigt weitere Teildarstellungen bzw. Schnitte der Einrichtung 1 samt fernbetätigter Arretierungseinrichtung 5. Dargestellt sind die Laufrollen 4, der Rahmen 3, das primäre als Schaltstange ausgebildete Schaltelement 10 sowie innerhalb des Rahmens 3 verlaufende sekundäre, ebenfalls als Schaltstangen ausgebildete Schaltelemente 11. Ferner erkennbar sind die Bowdenzüge 8,9, der Schaltkasten 6 sowie der Handhebel 7. Bei Betätigung des Handhebels 7 in Pfeilrichtung werden die Bowdenzüge 8,9 aktiviert, wobei das primäre Schaltelement 10 einer Kippbewegung um seine Längsachse 10' unterzogen wird. Das primäre Schaltelement 10 erstreckt sich unter einem Winkel von 90° zwischen zwei parallel verlaufenden sekundären Schaltelementen 11. Über in dieser Figur nicht erkennbare Hilfsmittel wird die Kippbewegung des primären Schaltelements 10 in eine translatorische Bewegung der sekundären Schaltelemente 11 umgewandelt. Im Bereich einer jeder Laufrolle 4 sind Feststellmittel 12 vorgesehen. Über in den Endbereichen 13 der sekundären Schaltelemente 11 vorgesehene Schwenkmittel 14 kann beispielsweise ein Exzenter betätigt werden, der auf die Feststellmittel 12 einwirkt.

Figur 3a ist eine ergänzende Teildarstellung der Einrichtung gemäß Figur 3. Gleiche Bauteile sind mit gleichen Bezugszeichen versehen. Während Figur 3 das primäre Schaltelement 10 zeigt, ist in Figur 3a in ergänzender Weise noch der Gelenkpunkt 10" dargestellt. Infolge der Kippbewegung des primären Schaltelemets 10 um die in Figur 3 dargestellte Achse 10', kann nun diese Kippbewegung über den Gelenkpunkt 10" in die in Figur 3 angesprochene translatorische Bewegung der sekundären Schaltelemente 11 umgewandelt werden.

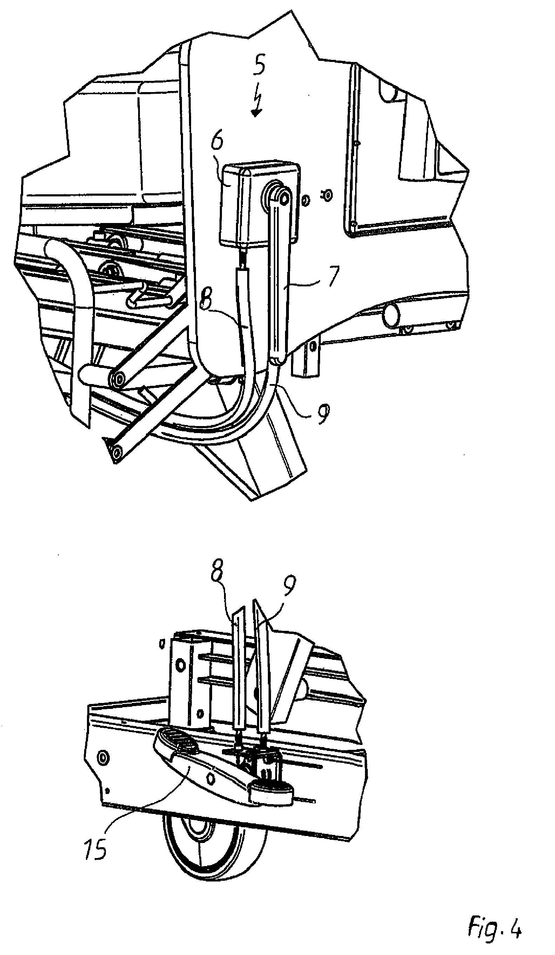

Figur 4 zeigt einzelne Bauteile der Arretierungseinrichtung 5. Erkennbar ist im oberen Bild der Figur 4 der Schaltkasten 6, der Handhebel 7 sowie die Bowdenzüge 8,9.

Im unteren Bild der Figur 4 sind die Bowdenzüge 8,9 sowie ein separater, mittels eines Fußes betätigbarer, Feststeller 15 erkennbar, der jedoch nur dann durch eine Bedienperson betätigt wird, wenn die zentrale Arretierungseinrichtung ausfallen sollte.

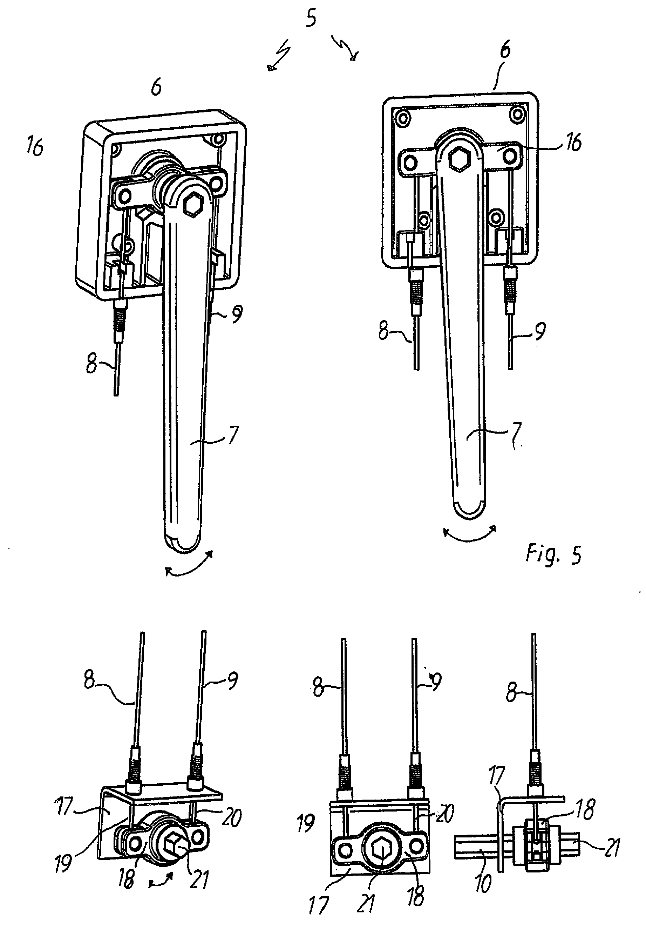

Figur 5 zeigt mehrere Teildarstellungen einzelner Bauteile einer manuell betätigbaren Arretierungseinrichtung 5. Die oberen Bilder der Figur 5 zeigen den Schaltkasten 6, den Handhebel 7 sowie die Bowdenzüge 8,9. Schaltkastenseitig sind die Bowdenzüge 8,9 im Bereich einer Schaltwippe 16 befestigt.

Die unteren Bilder der Figur 5 zeigen die schaltelementseitige Verlagerung der Bowdenzüge 8,9. Am hier nicht erkennbaren Rahmen der ebenfalls nicht dargestellten Einrichtung ist ein Winkelprofil 17 angebracht. Auch hier ist eine Schaltwippe 18 positioniert, die die freien Endbereiche 19,20 der Bowdenzüge 8,9 aufnimmt. Erkennbar ist das eine freie Ende 21 des primären Schaltelements 10. Durch Auslenkung, beispielsweise des Bowdenzuges 8 nach unten, wird diese Bewegung in eine Kippbewegung des primären Schaltelements 10 umgewandelt, die sich - wie in Figur 3 dargestellt - auf die sekundären Schaltelemente 11 in Form einer Translationsbewegung überträgt.

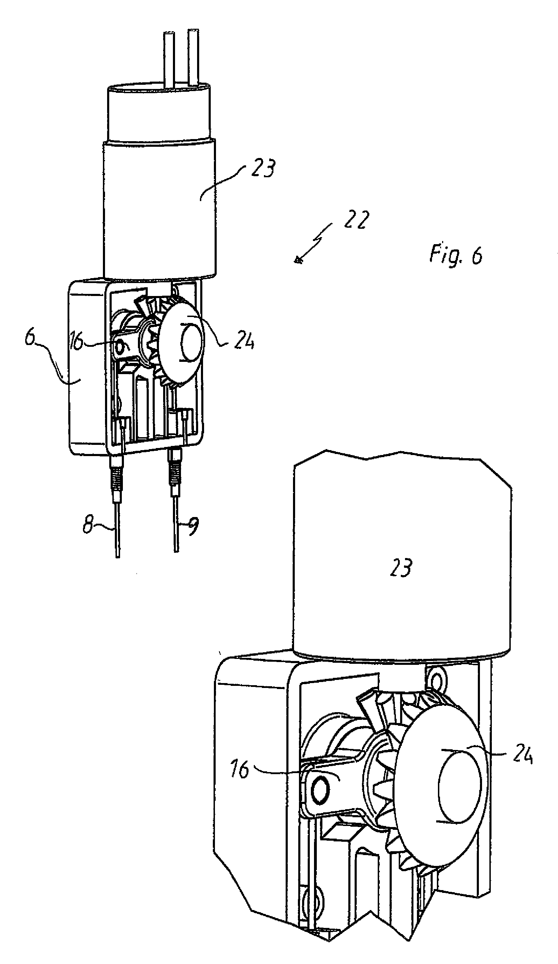

Figur 6 zeigt eine Alternative zu Figur 5. Dargestellt ist anstelle der manuellen Betätigung nunmehr ein elektrischer Antrieb, beispielsweise in Form eines Getriebemotors 22. Erhalten bleibt der Schaltkasten 6 sowie die Bowdenzüge 8,9 in Verbindung mit der Schaltwippe 16. Auch die schaltelementseitig vorgesehenen, in den vorangegangenen Figuren beschriebenen Bauteile der Arretierungseinrichtung bleiben erhalten. Anstelle des in Figur 5 dargestellten Handhebels kommt nun ein Elektromotor 23 zum Einsatz, der mit einem Getriebeelement 24 in Wirkverbindung steht. Ähnlich wie in Figur 5 angedeutet, muss auch das Getriebeelement 24 des Getriebemotors 22 lediglich einen geringen Umfangswinkel überbrücken, um eine Aktivierung der Bowdenzüge 8,9 zu bewirken.

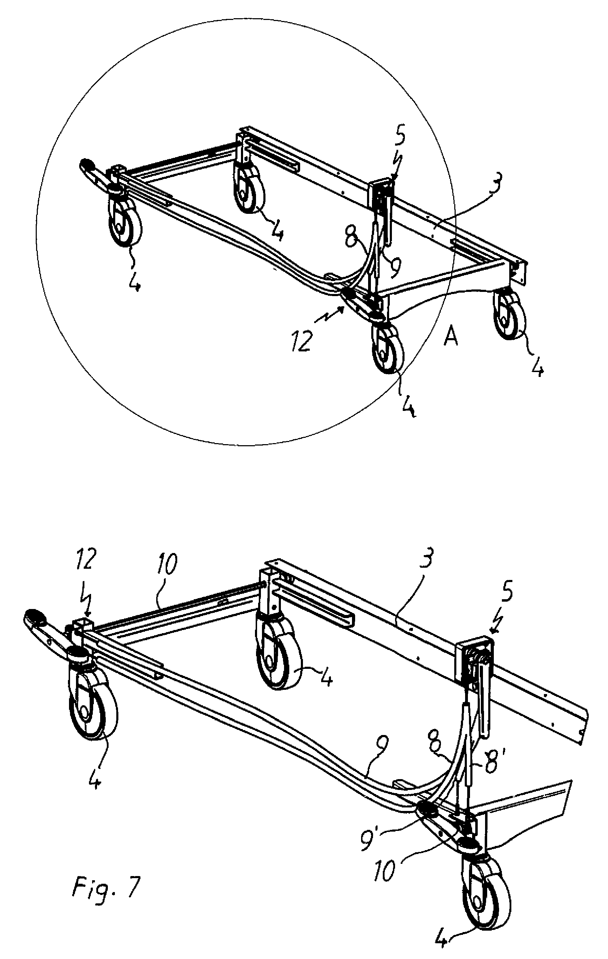

Figur 7 zeigt eine alternative Ausgestaltungsform der erfindungsgemäßen Einrichtung. Gleiche Bauteile sind mit gleichen Bezugszeichen versehen. Erkennbar ist der untere Rahmen 3 sowie die Laufrollen 4. Ferner erkennbar ist die zentrale Arretierungseinrichtung 5 sowie die Bowdenzüge 8, 9. Abweichend zu den bisherigen Figuren werden die Bowdenzüge 8, 9 ergänzt um weitere Bowdenzüge 8', 9'. Die Bowdenzüge 8, 9 wirken in gleicher Weise wie die Bowdenzüge 8', 9' mit einem primären Schaltelement 10 zusammen. Das jeweilige primäre Schaltelement 10 wirkt hierbei nicht über sekundäre Schaltelemente auf die Feststellmittel 12 der jeweiligen Laufrolle 4 ein, vielmehr sind zwei Laufrollen 4 jeweils durch ein primäres Schaltelement miteinander verbunden. Die Kippbewegung (s. Figur 3) des jeweiligen primären Schaltelements 10 wird hierbei unmittelbar auf die Feststellmittel der beiden parallel zueinander verlaufenden Laufrollen 4 übertragen.

### Bezugszeichenliste

- 1: Einrichtung
- 2: Liegemittel
- 3: Rahmen
- 4: Laufrolle
- 5: fernbetätigte Arretierungseinrichtung
- 6: Schaltkasten
- 7: Handhebel
- 8: Bowdenzug
- 8': Bowdenzug
- 9: Bowdenzug
- 9': Bowdenzug
- 10: primäres Schaltelement
- 10': Längsachse primäres Schaltelement
- 10": Gelenkpunkt
- 11: sekundäres Schaltelement
- 12: Feststellmittel
- 13: Endbereich sekundäres Schaltelement
- 14: Schwenkmittel
- 15: Feststeller
- 16: Schaltwippe
- 17: Winkelprofil
- 18: Schaltwippe
- 19: Endbereich Bowdenzug
- 20: Endbereich Bowdenzug
- 21: freies Ende primäres Schaltelement
- 22: Getriebemotor
- 23: Elektromotor
- 24: Getriebeelement

## Patentansprüche

1. Fernbetätigte Arretierungseinrichtung für an bewegbaren Einrichtungen (1), insbesondere Krankenbetten, angebrachten dreh- und/oder schwenkbar ausgebildeten Laufrollen (4), mit einrichtungsseitig vorgesehenen, etwa stangenartig ausgebildeten Schaltelementen (10,11), die mittel- oder unmittelbar auf Feststellmittel (12) einzelner oder mehrerer Laufrollen (4) einwirken, wobei die Schaltelemente (10,11) bedarfsweise zumindest teilweise miteinander verbunden sind, wobei außerhalb der Schaltelemente (10, 11) einrichtungsseitig ein Schaltkasten (6) vorgesehen ist, sich zwischen Bauteilen (16) des Schaltkastens (6) und Bauelementen (18) einzelner Schaltelemente (10) Bowdenzüge (8,9) erstrecken und die Bowdenzüge (8,9) über ein schaltkastenseitig vorgesehenes Betätigungselement (7,22) über das jeweilige Schaltelement (10,11) dergestalt auf die Feststellmittel (12) der jeweiligen Laufrollen (4) einwirken, dass selbige ver- oder entriegelbar sind.

2. Arretierungseinrichtung nach Anspruch 1, **dadurch gekennzeichnet, dass** die Einrichtung (1) laufrollenseitig einen umlaufenden Rahmen (3) aufweist, der zumindest die Schaltelemente (11) aufnimmt, wobei mindestens zwei Bowdenzüge (8,8',9,9') vorgesehen sind, die sich zwischen Bauteilen (16) des Schaltkastens (6) und Bauelementen (18) einzelner Schaltelemente (10) erstrecken, dergestalt, dass entweder zwei oder sämtliche der einrichtungseitig vorgesehenen Feststellmittel (12) zugehöriger Laufrollen (4) ver- oder entriegelbar sind.

3. Arretierungseinrichtung nach Anspruch 1 oder 2, **dadurch gekennzeichnet, dass** die freien Enden (19,20) der Bowdenzüge (8,8',9,9') sowohl schaltkastenseitig als auch schaltelementseitig jeweils mit einer Schaltwippe (16,18) verbunden sind, wobei durch Betätigung des Betätigungselements (7,22) eine Ver- oder Entriegelung einzelner oder mehrerer Feststellmittel (12) herbeiführbar ist.

4. Arretierungseinrichtung nach einem der Ansprüche 1 bis 3, **dadurch gekennzeichnet, dass** das Betätigungselement (7,22) manuell oder elektrisch betätigbar ist.

5. Arretierungseinrichtung nach einem der Ansprüche 1 bis 4, **dadurch gekennzeichnet, dass** das Betätigungselement (7) als Handhebel ausgebildet ist.

6. Arretierungseinrichtung nach einem der Ansprüche 1 bis 4, **dadurch gekennzeichnet, dass** das Betätigungselement (22) ein Elektromotor, insbesondere ein Getriebemotor ist.

7. Arretierungseinrichtung nach einem der Ansprüche 1 bis 6, **dadurch gekennzeichnet, dass** die, die schaltelementseitig vorgesehenen, mit den freien Enden (19,20) der Bowdenzüge (8,8',9,9') verbundene, Wippe (18) mit dem Endbereich (21) eines als primäres Schaltelement ausgebildetes Schaltelement (10) in Wirkverbindung steht.

8. Arretierungseinrichtung nach einem der Ansprüche 1 bis 7, **dadurch gekennzeichnet, dass** sich das wippenseitig vorgesehene primäre Schaltelement (10) quer zwischen weiteren, in Längsrichtung sich erstreckenden sekundären Schaltelementen (11) erstreckt und über in den jeweiligen Verbindungsbereichen zwischen primären und sekundären Schaltelementen (10,11) vorgesehenen Hilfsmitteln eine translatorische Bewegung der längsverlaufenden sekundären Schaltelemente (11) herbeiführbar ist, wobei in den laufrollenseitigen Endbereichen (13) der längsverlaufenden sekundären Schaltelemente (11) Umlenkmittel (14) vorgesehen sind, die mittel- oder unmittelbar auf die Feststellmittel (12) der jeweiligen Laufrolle (4) einwirken.

9. Arretierungseinrichtung nach einem der Ansprüche 1 bis 8, **dadurch gekennzeichnet, dass** die Umlenkmittel (14) durch Schwenkelemente gebildet sind.

10. Arretierungseinrichtung nach einem der Ansprüche 1 bis 9, **dadurch gekennzeichnet, dass** auf den freien Endbereich (21) des primären Schaltelements (10) zusätzlich ein mittels eines Fußes aktivierbarer zentraler Feststeller (15) angeordnet ist.
